# EUROPÄISCHE PATENTSCHRIFT

(11) **EP 2 210 124 B1**
(45) Veröffentlichungstag und Bekanntmachung des Hinweises auf die Patenterteilung: **17.06.2015**
(21) Anmeldenummer: 08848920.8
(22) Anmeldetag: 14.10.2008
(51) Int. Cl.: G01S 17/08, G01S 17/32, G01S 7/481

(54) **VORRICHTUNG ZUR OPTISCHEN DISTANZMESSUNG**
DEVICE FOR OPTICAL DISTANCE MEASUREMENT
DISPOSITIF DE MESURE OPTIQUE D'UNE DISTANCE

(30) Priorität: 12.11.2007 DE 102007053852
(43) Veröffentlichungstag der Anmeldung: 28.07.2010
(73) Patentinhaber: Robert Bosch GmbH, 70442 Stuttgart (DE)
(72) Erfinder: WOLF, Peter, 70771 Leinfelden-Echterdingen (DE); RICHARD, Matthieu, F-25370 Fourcatier (FR); BRAUN, Andreas, 70736 Fellbach (DE); STIERLE, Joerg, 71111 Waldenbuch (DE); HAASE, Bjoern, 70184 Stuttgart (DE); RENZ, Kai, 70771 Leinfelden-Echterdingen (DE)
(86) Internationale Anmeldenummer: PCT/EP2008/063792
(87) Internationale Veröffentlichungsnummer: WO 2009/062798

(56) Entgegenhaltungen:
- DE-A1- 2 012 995
- DE-A1- 10 130 763
- DE-A1-102006 013 290
- DE-A1-102006 013 292
- US-A- 5 354 983
- US-A1- 2002 195 549

## Beschreibung

### Stand der Technik

### Offenbarung der Erfindung

Die Erfindung geht aus von einer Vorrichtung zur optischen Distanzmessung nach dem Oberbegriff des unabhängigen Anspruchs.

Optische Entfernungsmessgeräte als solche sind seit längerer Zeit bekannt und werden inzwischen auch kommerziell in hoher Stückzahl vertrieben. Diese Geräte senden einen modulierten bzw. gepulsten Lichtstrahl aus, der auf die Oberfläche eines gewünschten Zielobjektes, dessen Abstand zum Gerät zu ermitteln ist, ausgerichtet wird. Das von dem angepeilten Zielobjekt reflektierte oder gestreute, rücklaufende Licht wird vom Gerät teilweise wieder detektiert und zur Ermittlung des gesuchten Abstandes verwendet.

Der Anwendungsbereich derartiger Entfernungsmessgeräte umfasst im Allgemeinen Entfernungen im Bereich von einigen wenigen Zentimetern bis zu mehreren hundert Metern.

In Abhängigkeit von den zu messenden Laufstrecken und der Rückstrahlfähigkeit des Zielobjektes ergeben sich unterschiedliche Anforderungen an die Lichtquelle, die Qualität des Mess-Strahls sowie an den Detektor.

Die aus dem Stand der Technik bekannten optischen Entfernungsmessgeräte lassen sich grundsätzlich entsprechend der Anordnung der im Gerät notwendigerweise vorhandenen Sende- bzw. Empfangskanäle in zwei Kategorien einteilen.

Zum einen gibt es Vorrichtungen, bei denen der Sendekanal in einem gewissen Abstand zu dem Empfangskanal angeordnet ist, sodass die jeweiligen optischen Achsen parallel zueinander, aber beabstandet voneinander verlaufen. Zum anderen gibt es monoaxiale Messvorrichtungen, bei denen der Empfangskanal koaxial zum Sendekanal verläuft.

Die erstgenannten biaxialen Mess-Systeme haben den Vorteil, dass es einer aufwändigen Strahlungsteilung zur Selektion des rücklaufenden Mess-Signals nicht bedarf, sodass beispielsweise auch ein optisches Übersprechen aus dem Sendekanal direkt in den Empfangskanal besser unterdrückt werden kann.

Andererseits besteht bei biaxialen Entfernungsmessgeräten unter anderem der Nachteil, dass es im Bereich kurzer Messentfernungen aufgrund einer Parallaxe zu Detektionsproblemen kommen kann. Dabei wandert die Abbildung des Zielobjektes auf der Detektoroberfläche des Gerätes, die für große Zielentfernungen noch eindeutig auf dem Detektor liegt, mit kürzer werdender Messentfernung zunehmend von der optischen Achse des Empfangsastes weg und erfährt zudem eine deutliche Änderung des Strahlquerschnittes in der Detektorebene.

Dies bedingt, dass ohne weitere Maßnahmen am Gerät, im Nahbereich der Detektion, d.h. für einen kleinen Abstand zwischen Zielobjekt und Messgerät, das detektierte Mess-Signal gegen Null gehen kann.

Derartige Messgeräte können zwar für einen bestimmten Entfernungsbereich optimiert werden, dies bedeutet jedoch dann eine deutliche Einschränkung des dem Messgeräts eigentlich zugänglichen Messbereichs.

Aus der DE 10 130 763 A1 ist eine Vorrichtung zur optischen Distanzmessung über einen großen Messbereich bekannt, die eine Sendeinheit mit einer Lichtquelle zur Aussendung modulierter, optischer Strahlung auf ein Zielobjekt hin aufweist, wobei die in diesem Messgerät angeordnete Empfangseinheit mit einem optischen Detektor zum Empfang der vom Zielobjekt rücklaufenden optischen Strahlung auf einer zur optischen Achse der Sendeeinheit beabstandeten Empfangsachse liegt. Die aktive, lichtempfindliche Fläche des Detektors der Empfangseinheit der DE 10 130 763 A1 verjüngt sich in Richtung einer Strahlverschiebung für kleiner werdende Zielobjektabstände, die sich aufgrund einer Parallaxe der rücklaufenden Messstrahlung ergibt.

Aus der DE 10 051 302 A1 ist ein Laserentfernungsmessgerät für den Nah- und Fernbereich mit einem speziellen Empfänger bekannt, der einen Sende- und einen Empfangskanal aufweist, wobei der Sendekanal aus einem Sendeobjektiv, in dessen Brennpunkt eine Laserlichtquelle angeordnet ist, besteht, und der Empfangskanal aus einem Empfangsobjektiv besteht, in dessen Brennebene sich eine Empfängeranordnung befindet. Die optischen Achsen des Sendeobjektives und des Empfangsobjektives verlaufen parallel zueinander mit einem endlichen Abstand. Die Empfängeranordnung des Laserentfernungsmessgerätes der DE 100 51 302 A1 ist eine Fotodioden-Chipanordnung mit mindestens zwei aktiven Fotodiodenflächen, die auf einer Geraden angeordnet sind, die die optischen Achsen des Sende- und des Empfangobjektives dieser Vorrichtung schneidet.

In der DE 10 2006 013292 A1 oder auch in der DE 100 51 302 A1 ist ausgeführt, wie mit Hilfe der geometrischen Ausgestaltung der aktiven Fläche eines Photodetektors ein optimiertes Empfangsverhalten erzielt werden kann. Das gemeinsame Ziel der Optimierung ist dabei, durch die Unterscheidung einer Haupt-Detektionsfläche für große Entfernungen und variabel ausgestaltete Rand-Detektionsbereiche für kleinere Entfernungen drei Zielgrößen simultan zu optimieren:
Einerseits ist durch die geeignete Ausgestaltung der aktiven Photodetektorfläche sicherzustellen, dass über den relevanten Entfernungsbereich ein ausreichend starkes Messsignal zur Verfügung steht. Dies betrifft insbesondere den Nahbereich in dem der im Fernbereich mittig fokussierte Spot seitlich relativ zur Spotposition im Fernfeld wandert.

Die zweite Aufgabe besteht darin, die Photodetektorfläche derart auszugestalten, dass die Dynamik der Signalpegel, die sich dadurch ergibt, dass die optische Empfangsleistung bei kürzeren Objektdistanzen quadratisch mit dem Kehrwert der Entfernung ansteigt, durch die spezielle Detektorform zu nivellieren. D.h. im Idealfall ist die Detektorfläche so ausgestaltet, dass ein vorzugebender Maximal-Signalpegel nicht überschritten wird. Das Ziel ist dabei beispielsweise die Vermeidung einer Übersteuerung des Messverstärkers.

Beide Optimierungen sind unter der Randbedingung durchzuführen, dass die insgesamt verfügbare Detektorfläche möglichst klein zu halten ist, damit möglichst wenig Umgebungslicht den Detektor erreicht. Je kleiner die aktive Fläche ist, desto geringer ist die Amplitude des sich durch Fremdlicht ergebenden Signalrauschens. Die Detektorfläche bildet somit die dritte zu optimierende, d.h. zu minimierende Zielgröße.

Aufgabe der vorliegenden Erfindung ist es, ausgehend vom Stand der Technik bei einer Vorrichtung zur optischen Distanzmessung zu gewährleisten, dass erstens über einen möglichst großen Messbereich, ein möglichst konstantes Empfangssignal gemessen werden kann (d.h. ein Empfangssignal dessen Signalamplitude sich nur geringfügig mit dem Abstand zum Zielobjekt verändert), dass dabei zweitens die Fremdlichtabhängigkeit durch eine möglichst kleine aktive Detektorfläche minimiert wird und dass zusätzlich drittens die Anforderungen an die Justagepräzision der Optik der Vorrichtung gering gehalten wird

Diese Aufgabe wird gelöst mit einer erfindungsgemäßen Vorrichtung zur optischen Distanzmessung mit den Merkmalen des unabhängigen Anspruchs.

### Vorteile der Erfindung

Um die Positioniertoleranz für den Photodetektor gering zu halten und gleichzeitig eine bewusste Bedämpfung der Signalanteile des Messsignals bei kurzer Objekt- bzw. Targetdistanz zu erzielen, wird erfindungsgemäß vorgeschlagen, vorteilhafter Weise bei Beibehaltung einer großräumigen und zusammenhängenden Detektorfläche, unterschiedlichen Flächenelementen innerhalb dieser Detektorfläche unterschiedliche optische Empfindlichkeiten zuzuordnen:
Die erfindungsgemäße Vorrichtung zur optischen Entfernungsmessung weist eine Sendeeinheit mit einer Lichtquelle zur Aussendung optischer Messstrahlung auf ein Zielobjekt bzw. Target hin, auf. Darüber hinaus besitzt die Vorrichtung u.a. eine zur optischen Achse der Sendeeinheit beabstandete Empfangseinheit mit zumindest einem optischen Detektor zum Empfang von vom Zielobjekt rücklaufender optischer Strahlung. In vorteilhafter Weise ist die Vorrichtung derart ausgebildet, dass der Detektor der Empfangseinheit zumindest eine Detektionsfläche aufweist, deren optisch aktive Fläche eine variierende optische Empfindlichkeit in Richtung einer Strahlverschiebung für kleiner werdende Zielobjektabstände besitzt.

Dabei nimmt die optische Empfindlichkeit der optisch aktiven Fläche des Detektors in vorteilhafter Weise in Richtung der Strahlverschiebung für kleiner werdende Zielobjektabstände hin ab. Mit anderen Worten wird erfindungsgemäß vorgeschlagen, diejenigen Flächen, die von rücklaufenden Licht des Messsignals bei zunehmend kürzerer Objektentfernung erreicht werden, mit einem zunehmend dichteren optischen Filterfunktionen zu versehen. Es ergeben sich somit Detektorflächen mit im wesentlichen 100% optischer Empfindlichkeit, in die vorteilhafter weise das Licht von Objekten in großer Entfernung abgebildet wird, sowie Detektorflächen mit reduzierter optischer Empfindlichkeit, die vorteilhafterweise bei kleiner Target-Distanz wirksam werden. Dabei soll 100% optische Empfindlichkeit der normalen, nicht reduzierten optischen Empfindlichkeit, beispielsweise eines Halbleitersensors, bei einer bestimmten Wellenlänge entsprechen.

Mit dieser erfindungsgemäßen Ausgestaltung wird die Größe der Strukturen der Detektorflächen, welche letztendlich maßgeblich für die geforderten Justagetoleranzen sind, in vorteilhafter Weise entkoppelt von der optischen Empfindlichkeit des Detektors.

So kann bei er erfindungsgemäßen Vorrichtung die unterschiedliche Empfindlichkeit der aktiven Detektorfläche beispielsweise aus einer unterschiedlich dicken bzw. optisch dichten Schicht eines auf die Detektorfläche aufgebrachten, absorptiven Mediums resultiert.

Ein derartiges Filter, welches beispielsweise als Graufilter aufgebaut sein kann, kann beispielsweise dadurch realisiert werden, dass auf die Detektorfläche eines Halbleiterchips eine unterschiedlich dicke Schicht eines absorptiven Mediums abgeschieden wird. Dies gestattet die Realisierung eines besonders gleichmäßigen Übergangs. Vorteilhafterweise wird dabei ein weicher, gradueller Übergang realisiert zwischen Bereichen mit im wesentlichen 100 % optischer Empfindlichkeit und Bereichen mit deutlich reduzierter Empfindlichkeit, beispielsweise 0% Empfindlichkeit.

Alternativerweise können auch unterschiedliche Reflektionsgrade der Detektionsoberfläche genutzt werden.

Denkbar ist auch, mehrere absorptive Schichten auf der Detektoroberfläche abzuscheiden, wobei sich die verschiedenen Schichten durch unterschiedliche Absorptionskoeffizienten auszeichnen oder ein und dieselbe Absorptionsschicht mit unterschiedlichen Masken mehrfach abzuscheiden.

In einer alternativen Ausführungsform der erfindungsgemäßen Vorrichtung kann die unterschiedliche Empfindlichkeit der aktiven Detektorfläche auch aus einer auf die Detektorfläche aufgebrachten Rastermaske variierender Rastergröße oder Rasterdichte resultieren.

In weiteren Ausführungsformen kann vorgesehen sein, dass zumindest ein diskreter Übergang zwischen einem Bereich mit im wesentlichen 100 % Empfindlichkeit und einem Bereich mit reduzierter Empfindlichkeit, vorhanden ist. Vorteilhafter Weise sind mehrere solche Übergange auf der Detektorfläche realisiert.

Eine aus technischer Sicht attraktive Alternative besteht darin, Flächen von Graufiltern variabler Transmission mit Hilfe einer Kombination aus einer vollständig intransparenten Beschichtung und einer gerasterten Maske zu erzielen. Dazu wird bei einer vorteilhaften Ausgestaltung der erfindungsgemäßen Vorrichtung die unterschiedliche optische Empfindlichkeit der aktiven Detektorfläche durch eine auf die Detektorfläche aufgebrachten Rastermaske realisiert. Die Variation in der optischen Empfindlichkeit kann dabei durch eine variierende Rastergröße oder auch durch eine Variation in der Dichte von Rasterpunkten erzeugt werden.

Dies entspricht einer Rasterung wie sie z.B. auch beim Druck von Grauflächen unterschiedlicher Schwärze bei Druckmedien eingesetzt wird. Dabei wird dann bei der erfindungsgemäßen Vorrichtung mit Hilfe eines fein strukturierten Musters in unterschiedlichen Flächenelementen der aktiv wirksamen Detektorflächen jeweils unterschiedliche relative Flächenanteile mit dem intransparenten Material überdeckt. Gemittelt über die sich minimal ergebenden Spot-Durchmesser des rücklaufenden Messsignals ergibt sich auch dann eine gleitend veränderliche optische Empfindlichkeit des Detektors.

Der Vorteil eines "gerasterten" gleitenden Graufilters besteht dabei darin, dass bei der Prozessierung des Halbleiters, der als Detektor dient, auf bestehende Technologien zurückgegriffen werden kann. Ein solcher Detektor ist damit im Vergleich mit den bekannten Detektoren mit einer 100% empfindlichen Detektorfläche ohne Mehrkosten zu fertigen.

Als Rastermuster kommen dabei unter anderem ein beispielsweise streifenförmiges, regelmäßiges Muster oder auch ein pseudo-zufälliges Punktmuster mit kleinen bis sehr kleinen Einzelpunkten in Frage. Die minimale Strukturgröße ist dabei durch die Fertigungstechnologie des Halbleiterprozesses vorgegeben.

In vorteilhafter Weise kann die optische Empfindlichkeit des Detektors zusätzlich dadurch reduziert werden, dass eine sich in Richtung einer Strahlverschiebung für kleiner werdende Zielobjektabstände verjüngende, optisch aktiven Fläche Verwendung verwendet wird, so dass auch über diesen Effekt weniger Signal des rücklaufenden Messsignals auf den Detektor trifft.

Weitere Vorteile der erfindungsgemäßen Vorrichtung ergeben sich aus der nachfolgenden Beschreibung einiger Ausführungsbeispiele.

### Zeichnung

In der Zeichnung sind Ausführungsbeispiele der erfindungsgemäßen Vorrichtung dargestellt. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

Es zeigen:
- Figur 1: eine schematisierte Ansicht auf ein Ausführungsbeispiel einer erfindungsgemäßen Vorrichtung zur optischen Distanzmessung,
- Figur 2: eine schematische Darstellung der Variation des rücklaufenden Mess-Strahlenbündels in der Detektionsebene bei Variation des Messobjektabstandes,
- Figur 3: ein Dimensionierungsbeispiel für die Optik einer Vorrichtung nach Figur 1,
- Figur 4: eine Darstellung der Variation der Fokusgröße in der Detektionsebene als Funktion der Targetentfernung für das Dimensionierungsbeispiel gemäß Figur 3,
- Figur 5: eine Darstellung der Variation der Fokusposition in der Detektionsebene als Funktion der Targetentfernung für das Dimensionierungsbeispiel gemäß Figur 3,
- Figur 6: eine schematisierte Aufsicht auf eine erste Ausführungsform der Detektionsfläche eines Detektors der erfindungsgemäßen Vorrichtung,
- Figur 7: eine schematisierte Aufsicht auf eine zweite Ausführungsform der Detektionsfläche eines Detektors für eine erfindungsgemäßen Vorrichtung,
- Figur 8: eine schematisierte Aufsicht auf eine dritte Ausführungsform der Detektionsfläche eines Detektors für eine erfindungsgemäßen Vorrichtung.

### Beschreibung der Ausführungsbeispiele

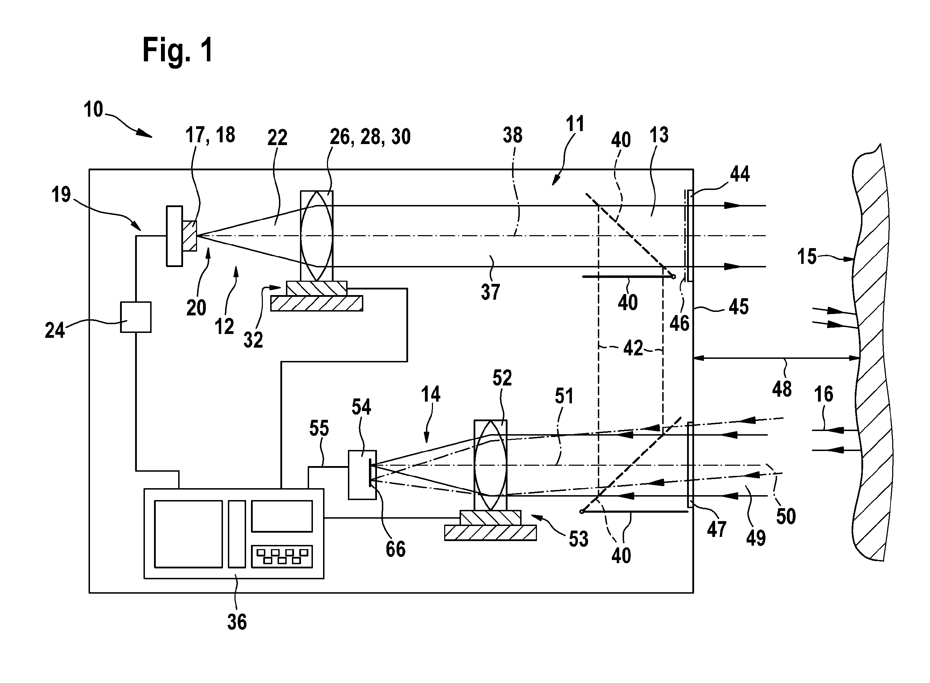

In Figur 1 ist in schematisierter Weise eine erfindungsgemäße Vorrichtung zur optischen Distanzmessung mit den wichtigsten Komponenten zur Beschreibung ihrer Funktion dargestellt. Das erfindungsgemäße Gerät 10 weist ein Gehäuse 11 auf, in dem eine Sendeeinrichtung 12 zur Erzeugung eines Mess-Signals 13 sowie eine Empfangseinrichtung 14 zur Detektion des von einem Zielobjekt 15 rücklaufenden Mess-Signals 16 angeordnet sind.

Die Sendeeinrichtung 12 beinhaltet eine Lichtquelle 17, die im Ausführungsbeispiel der Figur 1 durch eine Halbleiter-Laserdiode 18 realisiert ist. Die Verwendung anderer Lichtquellen in der erfindungsgemäßen Vorrichtung ist aber ebenso möglich. Die Laserdiode 18 sendet einen Laserstrahl 20 in Form eines für das menschliche Auge sichtbaren Lichtbündels 22 aus. Vorteilhafter weise handelt es sich dabei um grünes, rotes, oder blaues Licht.

Die Laserdiode 18 wird dazu über ein Steuergerät 24 betrieben, das durch eine entsprechende Elektronik eine Modulation des elektrischen Eingangssignals 19 der Diode 18 erzeugt. Durch eine derartige Modulation des Diodenstroms lässt sich erreichen, dass das optische Mess-Signal 13, welches zur Entfernungsmessung genutzt wird, ebenfalls in gewünschter Weise moduliert wird.

Das Laserstrahlbündel 20 durchläuft anschließend eine Kollimationsoptik 26 in Form eines Objektivs 28, das in der Figur 1 in vereinfachter Weise in Form einer einzelnen Linse 30 dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken ermöglicht.

Alternativ kann die Kollimationsoptik 26 jedoch auch bereits Bestandteil der Laserdiode 18 sein bzw. fest mit dieser verbunden sein.

Nach Durchlaufen des Objektivs 28 ergibt ein beispielsweise amplitudenmoduliertes Signal 13 in Form eines parallelen Lichtbündels 37, das sich entlang der optischen Achse 38 der Sendeeinheit 12 ausbreitet, wie es in Figur 1 schematisch dargestellt ist. Im Sendeast 12 der erfindungsgemäßen Vorrichtung befindet sich zudem noch eine vorzugsweise schaltbare Strahlumlenkung 40, die es gestattet, das Mess-Signal 13 unter Umgehung eines Zielobjekts direkt, d. h. geräteintern auf die Empfangseinheit 14 des Gerätes 10 umzulenken. Auf diese Weise wird eine geräteinterne Referenzstrecke 42 erzeugt, die eine Kalibrierung bzw. einen Abgleich des Mess-Systems gestattet.

Wird mit der erfindungsgemäßen Vorrichtung eine Distanzmessung durchgeführt, verlässt der Mess-Strahl 13 das Gehäuse 11 der erfindungsgemäßen Vorrichtung durch ein optisches Fenster 44 in der Stirnwand 45 des Gerätes 10. Die Öffnung des optischen Fensters kann beispielsweise durch einen Shutter 46 gesichert sein. Zur eigentlichen Messung wird das Messgerät 10 sodann auf ein Zielobjekt 15 ausgerichtet, dessen Entfernung 48 zum Messgerät ermittelt werden soll. Das an dem gewünschten Zielobjekt 15 reflektierte oder auch gestreute Signal 16 bildet ein rücklaufendes Strahlenbündel 49 bzw. 50, das zu einem gewissen Teil wieder in das Messgerät 10 zurückgelangt.

Durch ein Eintrittsfenster 47 an der Stirnseite 45 des Geräts 10 wird die rücklaufende MessStrahlung 16 in das Messgerät eingekoppelt und im Ausführungsbeispiel der Figur 1 auf eine Empfangsoptik 52 gelenkt.

In Figur 1 sind exemplarisch zur Verdeutlichung zwei rücklaufende Mess-Strahlenbündel 49 bzw. 50 für zwei unterschiedliche Zielobjektabstände 48 eingezeichnet. Für große Objektabstände und groß heißt in diesem Fall groß gegenüber der Brennweite der Empfangsoptik 52, fällt das vom Zielobjekt rücklaufende Signal 16 parallel zur optischen Achse 51 der Empfangseinrichtung 14 ein. Dieser Fall ist im Ausführungsbeispiel der Figur 1 durch das Mess-Strahlenbündel 49 repräsentiert. Mit kleiner werdendem Objektabstand wird das in das Messgerät einfallende rücklaufende Signal 16 aufgrund einer Parallaxe immer mehr gegenüber der Achse 51 der Empfangseinheit 14 geneigt. Als Beispiel für ein solches rücklaufendes Mess-Strahlenbündel im Nahbereich der Entfernungsmessvorrichtung ist in Figur 1 das Strahlenbündel 50 eingezeichnet.

Die Empfangsoptik 52, die im Ausführungsbeispiel der Figur 1 ebenfalls nur schematisch, durch eine einzelne Linse symbolisiert ist, kollimiert das rücklaufende Mess-Signal 16 und fokussiert dessen Strahlenbündel auf die lichtempfindliche Oberfläche 66 eines Empfangsdetektors 54. Der Detektor 54 weist zur Detektion der optischen Messstrahlung zumindest eine Photodiode, beispielsweise eine PIN-Diode oder eine APD (Avalanche Photo Diode) oder aber auch zumindest einen CCD-Chip als lichtempfindliches Element 66 auf. Darüber hinaus sind natürlich auch andere, dem Fachmann bekannte Flächendetektoren als Empfangsdetektor möglich. Der Flächendetektor ist in der Regel mit seinen aktiven lichtempfindlichen Oberflächen 66 senkrecht auf die optische Achse des Empfangsastes ausgerichtet. Das einfallende optische Signal wird durch den Empfangsdetektor 54 in ein elektrisches Signal 55 umgewandelt und der weiteren Auswertung in einer Auswerteeinheit 36 der erfindungsgemäßen Vorrichtung zugeführt.

Die Empfangsoptik 52, die im Ausführungsbeispiel der Figur 1 nicht einschränkend ebenfalls auf einer Verstellmimik 53 angebracht ist, befindet sich ungefähr im Abstand ihrer Brennweite von der aktiven Oberfläche 66 des Detektors entfernt, sodass einfallende Strahlung von einem Zielobjekt kommt, welches weit entfernt vom Messgerät liegt, genau auf den Detektor bzw. auf die aktiven lichtempfindlichen Flächen fokussiert.

Bei kleinen Abständen zum Zielobjekt ist jedoch zu beobachten, dass die Abbildungsposition für den am Zielobjekt reflektierten oder gestreuten Messfleck sich zunehmend vom Fokus der Empfangslinse entfernt. So wandert der rücklaufende Mess-Strahl mit kleiner werdendem Abstand des Zielobjektes zum Messgerät immer weiter von der optischen Achse der Empfangseinrichtung weg und weicht somit auch immer mehr von der optischen Achse der Sendeeinrichtung ab. Zudem wird das rücklaufende Mess-StrahlenBündel aufgrund der geänderten Abbildungsverhältnisse am Empfangsobjektiv nicht mehr genau auf die Detektoroberfläche fokussiert. Mit kürzer werdendem Zielobjektabstand ergibt sich ein immer größer werdender Messfleck auf der Detektoroberfläche.

Die optischen Achsen des Sende- und Empfangssystems weisen einen endlichen Parallelversatz (Parallaxe) auf. Dieser Versatz wird in der Praxis durch den Durchmesser der Empfangslinse 52 vorgegeben und liegt realistisch in der Größenordnung von ca. 1-3 cm.

Auf weitere, im Messgerät vorhandene Komponenten, die aber für das Verständnis der erfindungsgemäßen Vorrichtung nicht unbedingt notwendig sind, soll in diesem Zusammenhang nicht weiter eingegangen werden. Es sei nur angemerkt, dass das Messgerät natürlich auch über eine Steuer- und Auswerteeinheit 36 verfügt.

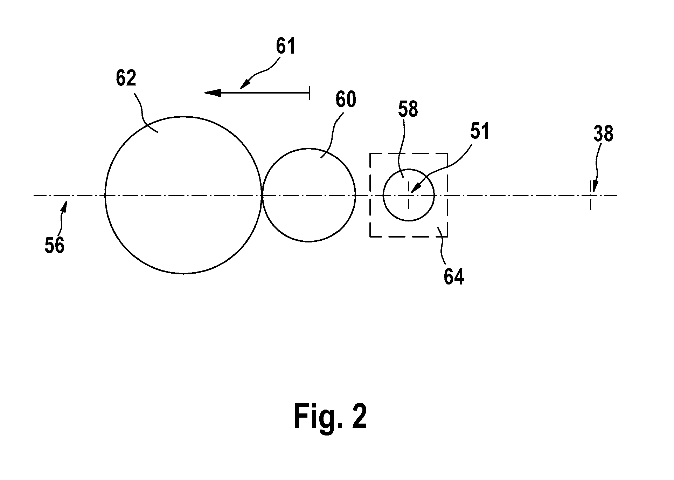

Die Zusammenhänge zwischen dem Abstand des zu vermessenden Zielobjektes (Target) vom Messgerät und der Position bzw. der Größe des Messflecks auf der Detektoroberfläche ist in qualitativer und schematischer Weise in Figur 2 zur besseren Übersicht dargestellt.

Figur 2 zeigt dabei eine Aufsicht auf eine Detektoroberfläche 64 nach dem Stand der Technik in Blickrichtung des vom Messobjekt rücklaufenden Mess-Signals 16. Mit dem Bezugszeichen 56 versehen ist die gemeinsame Ebene der optischen Achse 38 der Sendeeinheit 12 mit der optischen Achse 51 der Empfangseinheit 14. Der Messfleck 58 der rücklaufenden Strahlung 16 für sehr große Objektabstände 48 liegt auf der optischen Achse 51 der Empfangseinheit 14 und wird auf der Oberfläche 64 des Detektors zu einem kleinen Fleck fokussiert. Da der Detektor 54 in etwa in Abstand der Brennweite der Empfangsoptik 52 steht, wird Licht, das optisch gesehen aus dem Unendlichen kommen, aufgrund der optischen Abbildungsgesetze direkt auf die Detektoroberfläche fokussiert. In Figur 2 ist zur Verdeutlichung der Zusammenhänge eine "klassische" Detektorfläche 64 eines Detektors nach dem Stand der Technik gestrichelt eingezeichnet.

Mit abnehmender Distanz 48 des Messgerätes 10 von einem Zielobjekt 15 fällt das rücklaufende Signal 16 zunehmend schräger auf das Empfangsobjektiv 52 ein, sodass auch der Messfleck auf der Detektoroberfläche in Richtung des Pfeils 61 in Figur 2 wandert.

Der in Figur 2 ebenfalls eingezeichnete Messfleck 60 für einen kleinen Objektabstand 48 des Zielobjektes 15 vom Messgerät 10 ist somit von der optischen Achse 51 der Empfangseinrichtung weg gewandert und in seiner Ausdehnung, insbesondere lateralen Ausdehnung deutlich vergrößert.

Bei sehr kleinem Messabstand 48 des Messobjektes 15 zum Messgerät ergibt sich in der Detektorebene ein Messfleck 62 des rücklaufenden Mess-Signals 16, der nochmals deutlich vergrößert ist und zudem auch weiter entfernt von der optischen Achse 51 der Empfangseinheit 14 zu liegen kommt. Eine solche Verschiebung des zu detektierenden Messflecks mit dem relativen Abstand 48 eines Messobjektes 15 zum Messgerät 10 kann ggf. dazu führen, dass für sehr kleine Objektabstände, das rücklaufende Signal 16 nicht mehr auf die aktive Fläche des Messempfängers 54 fällt, wie dies durch die angedeutete, gestrichelt eingezeichnete Fläche 64 eines "klassischen" Messempfängers in Figur 2 angedeutet sein soll.

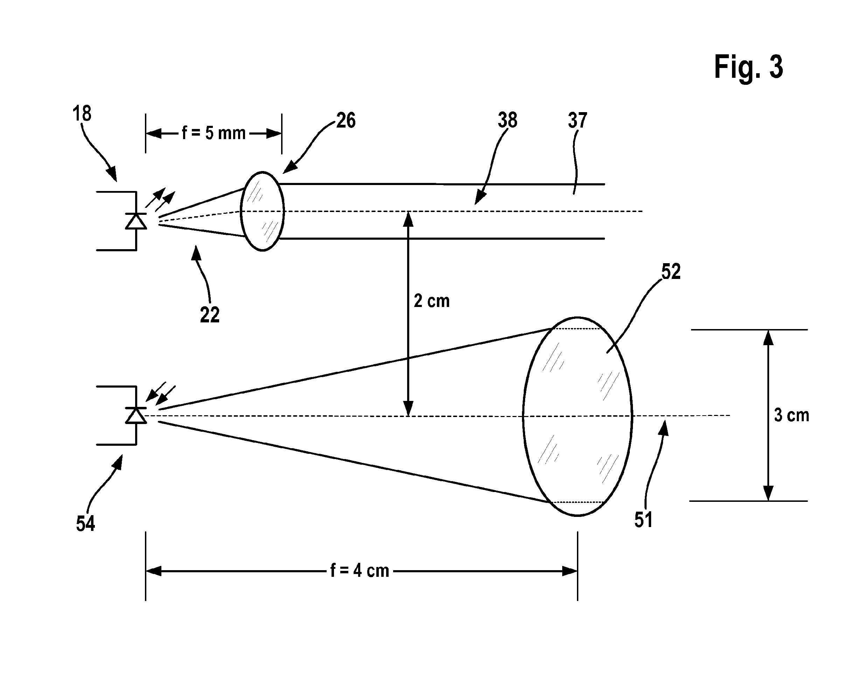

Figur 3 zeigt ein in den folgenden Abschnitten zum Zweck der Illustration verwendetes, konkrete Dimensionierungsbeispiel mit einer Parallaxe von 2 cm, einer Empfangs-Brennweite von 4 cm und einem Linsendurchmesser der Empfangsoptik von 3 cm. Die Bezugszeichen entsprechen dabei den Komponenten in Figur 1.

Die Parallel-Verschiebung der optischen Sende- und Empfangsachsen führt dazu, dass das vom Zielobjekt zurückgeworfene Licht den Photodetektor je nach Entfernung 48 mit einem variierenden Einfallswinkel erreicht. Dieser variierender Einfallswinkel führt im Ergebnis dazu, dass das vom Zielobjekt zurückgeworfene Licht, die Detektorebene an je nach Entfernung 48 lateral verschobenen Orten trifft. Der Spot "bewegt" sich somit mit abnehmender Entfernung zum Target von der optischen Achse 51 der Detektoroptik weg. Gleichzeitig zu dieser Lateralbewegung wächst die Amplitude des in die Detektorebene abgebildeten Lichts reziprok quadratisch mit dem reduzierten Abstand an.

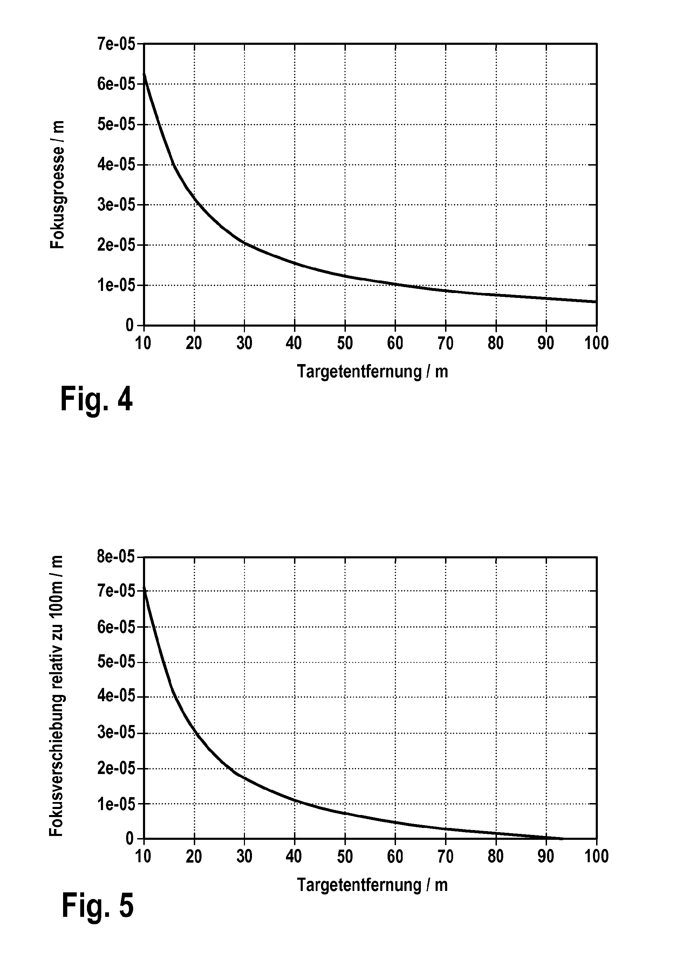

Dieser funktionale Zusammenhang der Position auf dem Detektor in Abhängigkeit von der Target- bzw. Messentfernung ist in Figur 5 wiedergegeben.

Die Lateralbewegung des Fokus in der Brennebene erfolgt bei großen Objektabständen 48 zunächst relativ "langsam", d.h. die Änderung der Position des Fokus mit geänderten Abstand ist eher gering.

Bei den optischen Parametern gemäß Figur 3 ergibt sich bei Veränderung der Targetentfernung 48 von 100 m auf 50 m eine Bewegung des Spotmittelpunkts in der Brennebene der Empfangslinse von nur rund 8 µm.

Für sehr kurze Distanzen 48 wird der Effekt dieser Lateralbewegung stärker. So ergibt sich bei einem Abstand 48 zum Target von nur 4 cm beispielsweise ein lateraler Versatz von 2 cm.

Gleichzeitig mit dem lateralen Auswandern des zu detektierenden Messsignals wird auch der sich in der Brennebene ergebende Spotdurchmesser des rücklaufenden Signals größer. Die Größe des sich in der Bildebene des Detektors 66 ergebenden Lichtflecks ergibt sich bei perfekter Fokussierung für einen ausgewählten Abstand 48 zum Target in erster Linie durch die Abbildungsfehler des Empfangslinsensystems 52 und ggf. durch eine Beugung an der Apertur der Empfangslinse. So sind technisch durchaus Spotdurchmesser von 10 µm bei einer Brennweite der Empfangslinse 52 von rund 4 cm zu realisieren. Ein typischer Verlauf der Fokusgröße als Funktion der Entfernung des Messgerätes zum Target, wie er sich aus den Dimensionierungsgrößen entsprechend Figur 3 ergibt, ist in Figur 4 schematisch dargestellt.

In der Praxis wird das Empfangsoptiksystem so justiert, dass sich ein minimaler Spotdurchmesser für große Entfernungen ergibt. Beispielsweise bei einem Targetabstand 48 von 100 m. So kann sichergestellt werden, dass das schwache Messsignal aus großer Entfernung den Photodetektor möglichst vollständig erreicht. Insbesondere kann so auch vermieden werden, dass ein Überstrahlen der aktiven Detektorfläche durch schlechte Fokussierung zu einer Reduzierung des Nutzsignals führt, welches bei großem Abstand ohnehin sehr schwach ist.

Falls, wie üblich, keine adaptive Nachfokussierung vorgesehen ist, führt eine Reduzierung des Targetabstands 48 zu einer Vergrößerung des Spots in der Brennebene der Empfangsoptik.

Trägt man den sich ergebenden Fokusdurchmesser als Funktion des Targetabstands 48 auf (siehe Figur 4), so ergibt sich zunächst jedoch nur eine geringfügige Vergrößerung des Fokus mit abnehmender Entfernung. Die sich durch die Defokussierung ergebende Vergrößerung des Brennpunkts wird durch die ohnehin vorhandenen Linsenfehler überlagert. Beobachtet man die Form des in die Brennebene 66 abgebildeten Nutzlichts als Funktion des Zielabstands 48, ergibt sich daher zunächst ein in der Brennebene hauptsächlich "wandernder" Bildpunkt von wenig veränderlicher Größe. Erst bei vergleichsweise kurzen Messdistanzen 48 von beispielsweise 30 m beobachtet man merklich zunehmende Spotdurchmesser von beispielsweise 20 µm. Bei 10 m Messdistanz, d.h. abstand des Messgerätes zum zu vermessenden Targetobjekt ergibt sich ein Spotdurchmesser von typischerweise rund 50 µm.

Allerdings kompensiert die Zunahme des Spotdurchmessers des rücklaufenden Signals auf der Detektoroberfläche den vergrößerten lateralen Versatz aufgrund der Parallaxe bei weitem nicht. Um auch im absoluten Nahbereich Licht auf den Detektor abzubilden, wäre es damit erforderlich, die Detektorgröße auf mehrere Zentimeter auszudehnen. Dies ist praktisch nicht realisierbar.

Um daher auch bei nur wenigen Zentimeter Abstand zum zu vermessenden Target, noch ausreichend Licht auf den Detektor abzubilden, kann alternativerweise auch die Empfangslinse so ausgestaltet werden, dass ein Teil der Linsenfläche so ausgeformt ist, dass auch Licht aus dem Nahbereich den Detektor erreicht. In Analogie zur Augenoptik kann dann gewissermaßen von einer "Gleitsicht"-Linse gesprochen werden, bei der unterschiedliche Teile der Linsenfläche für unterschiedliche Entfernungen wirksam werden. Der Unterschied zur Augenoptik besteht dabei nur darin, dass keine scharfe Abbildung gefordert ist, sondern vielmehr nur sichergestellt werden muss, dass überhaupt etwas Licht den Detektor erreicht.

Das zu vermessende Zielobjekt befindet sich im Allgemeinen nicht in abgedunkelten Räumen. Deswegen erreicht neben demjenigen Licht, welches vom Zielobjekt aufgrund der Beleuchtung durch die Sende-Lichtquelle zurückgeworfen wird, auch Fremdlicht den Detektor. Dieses Fremdlicht äußert sich in den elektrischen Messgrößen dadurch, dass dem mit dem Photodetektor empfangenen Messsignal ein rauschartiges Störsignal überlagert ist. Der für die Messleistung des Laser-Entfernungsmessers entscheidende Parameter ist dabei das Verhältnis zwischen dem auf dem Photodetektor auftreffenden Messsignal und dem durch das Fremdlicht verursachten Störsignal. Optisch kann dabei davon ausgegangen werden, dass das in die Brennebene der Empfangsoptik abgebildete Fremdlicht zu einer in der Umgebung der optischen Achse quasi homogenen Beleuchtung führt.

Der Wunsch nach einer Reduzierung des Verhältnisses von Fremdlicht zu Nutzlicht bedingt damit eine Reduzierung der aktiven Detektorfläche. Dies ist praktisch jedoch nur in Grenzen möglich. Das wird bei Betrachtung eines einfachen Zahlenbeispiels offensichtlich:
Verwendet man beispielsweise einen besonders kleinen Detektor mit einem - dem bei 100 m erreichten optimalen Fokus entsprechendem - Durchmesser von nur 10 µm, so ist das Verhältnis zwischen Nutz- und Fremdlicht für den Fall perfekter Fokussierung bei einem festen Targetabstand optimal. Allerdings führt dann bereits eine Veränderung des Targetabstands auf 50 m durch den Parallelversatz des Spots in der Brennebene dazu, dass das Nutzlicht den Detektor praktisch nicht mehr erreicht. Diese Signalabnahme wird nur zu geringen Teilen von der Vervierfachung der optischen Leistung (gemäß Abstands-Quadratgesetz) kompensiert. Der Entfernungsmesser ist bei einer derartigen Auslegung nur in einem engen Fenster von Messentfernungen nutzbar.

Gleichzeitig ist bei einem derart kleinen Detektor auch die Anforderung an die Justagetoleranz des Empfangslinsensystems offensichtlich sehr hoch. Bereits bei einer Verstellung der Position der Empfangslinse 52 relativ zum Photodetektor 54 von nur 10 µm erreicht das Nutzlicht die aktive Detektorfläche nicht mehr. Die Fertigung eines solchen Entfernungsmessers würde deswegen mit hohen Anforderungen an die Justagetoleranz einhergehen.

Eine isolierte Optimierung des Signal- zu Rausch-Verhältnisses durch Minimierung der Detektorfläche ist technisch, wie oben illustriert, nicht praktikabel. Die aktive Detektorfläche muss somit im Vergleich mit der optimalen Spotgröße praktisch deutlich vergrößert werden.

Als Photodetektoren kommen vor allem Silizium-Photodioden in Frage, insbesondere Lawineneffekt-Photodioden. Ein Charakteristikum dieser Photodioden ist, dass es kein Problem bereitet, die aktiv wirksame Detektorfläche durch Abdeckung mit Metallsehichten weitgehend frei zu gestalten. Um die einzelnen Photodetektoren nach dem Vereinzeln und beim Einsetzen in Gehäuse noch verarbeiten zu können, ist eine minimale Kantenlänge des Siliziumplättehens erforderlich von, z.B. rund 500 µm x 500 µm. Innerhalb dieser Basisfläche kann die genaue Struktur des dem Licht ausgesetzten Elements durch Photolithographie-Masken mit Genauigkeiten von wenigen Mikrometern nahezu frei vorgegeben werden. Die Teile des Photodetektors, welche inaktiv sein sollen sind nach dem Lithographieprozess mit einer nicht transparenten Schicht überdeckt.

Wählt man als Detektor beispielsweise ein kreisrundes Element mit 30 µm Durchmesser, so ergibt sich eine erheblich vereinfachte Justage. Auch verbleibt der Fokus des Nutzsignals dann in einem größeren Ortsintervall vollständig auf dem Detektor. Diese Vereinfachung wird allerdings um den Preis eines erheblich vergrößerten Rauschsignals aufgrund von erheblich mehr den Detektor erreichendem Fremdlicht erkauft.

Als zusätzliche Komplikation ergibt sich, dass die Absolutwerte des Messsignals in starker Weise von der Targetentfernung 48 abhängen. So ergibt sich z.B. bei einer Distanz von 10 m im Vergleich zu 100 m eine um den Faktor 100 größere Signalamplitude, wenn alles Licht den Detektor erreicht. Dies birgt die Gefahr, die Messverstärker bei zu geringer Distanz zu übersteuern. Eine simple Vergrößerung der Detektorfläche verursacht somit ebenfalls Problem. Idealerweise wird daher das Messsignal, welches den Photodetektor bei nahen Objekten, d.h. kurzen Targetentfernungen erreicht, bewusst bedämpft. Nur für große Entfernungen, bei denen die Signalamplitude gering ist, sollte möglichst 100% des Lichts erfasst werden.

Um diesem Problem zu begegnen, ist in der DE 101 30 763 A1 vorgeschlagen werden, die bei reduzierten Targetabständen 48 aktiv wirksame Detektorfläche dadurch zu reduzierten, dass sich die Detektorfläche mit zunehmendem Abstand von der optischen Achse derart verjüngt, dass die ursprüngliche Detektorfläche in Form eines schmalen Streifens ausläuft. Dort wo das optische Signal von Targets in kurzer Entfernung in die Brennebene abgebildet wird, ist die Detektorfläche deutlich schmaler als die Spotgröße ausgeformt, so dass nur ein Bruchteil des Lichts erfasst wird. Mittels dieser Maßnahme kann eine aktive Bedämpfung des Signals erzielt werden. Die Dynamik der Signale, die z.B. ein Messverstärker abdecken können muss, um sowohl für kurze als auch große Objektdistanzen funktionsfähig zu sein, kann auf diese Weise reduziert werden.

Ein linienförmig auslaufender Detektor oder auch das Vorsehen eines punktförmigen Nebendetektors für den Nahbereich, wie er beispielsweise aus der DE 100 51 302 C2 bekannt ist, haben jedoch den Nachteil, dass die Justage kritisch wird, insbesondere sofern die Vergrößerung des Fokus-Spots aufgrund der reduzierten Entfernung noch nicht merklich ist.

Die Kompensation der hohen Signaldynamik beruht in beiden Fällen des angesprochenen Standes der Technik darauf, dass aus dem sich für kurze Objektdistanzen ergebenden Spot in der Bildebene nur ein kleiner Teil herausgeschnitten wird. Die wirksame Detektorfläche muss somit deutlich kleiner sein, als die Spotgröße. Soll beispielsweise aus einem Spot mit einem Durchmesser von 20 µm ein linienförmiger Streifen herausgeschnitten werden, der rund 10% der Lichtleistung des Gesamtspots enthält, so muss die Linienbreite einen kleinen Wert zwischen 1 und 2 µm annehmen.

Abdeckungsmasken für Siliziumdetektoren gestatten zwar prinzipiell derart kleine Strukturgrößen, allerdings verbleibt das Problem, dass die Position der Spots in der Bildebene, das heißt die Optikjustage, mit einer vergleichbar engen Toleranz realisiert werden muss. Am im obigen Abschnitt vorgestellten Beispiel illustriert bedeutet dies:
Um stabil eine Dämpfung von 10% durch das "Herausschneiden" eines schmalen Streifens aus dem Abbildungsspot zu erzielen, ist neben einer Streifenbreite von rund 1 µm auch sicherzustellen, dass das Zentrum des Spots bis auf wenige Mikrometer genau zentrisch auf den Streifen abgebildet wird. Ein Höhenversatz wirkt sich sofort dadurch aus, dass die eigentlich wünschenswerte Bedämpfung des Signals wesentlich größer wird, als vorgesehen.

Um die Positioniertoleranz für den Photodetektor gering zu halten und gleichzeitig eine bewusste Bedämpfung der Signalanteile bei kurzer Objektdistanz zu erzielen, wird erfindungsgemäß vorgeschlagen, insbesondere bei Beibehaltung einer großräumigen und zusammen-hängenden Detektorfläche, unterschiedlichen Flächenelementen innerhalb dieser Detektorfläche unterschiedliche Empfindlichkeiten zuzuordnen. Mit anderen Worten wird vorgeschlagen, die Flächen, die von Licht bei zunehmend kürzerer Objektentfernung erreicht werden mit einem zunehmend dichteren, optischen Filter abzudecken. Es ergeben sich dann Detektorflächen mit im wesentlichen 100% der Empfindlichkeit, in die das Licht von Objekten in großer Entfernung abgebildet wird, sowie Detektorflächen mit reduzierter Empfindlichkeit, die bei kleiner Distanz wirksam werden.

Damit wird in vorteilhafter Weise die Größe der Strukturen der Detektorflächen, welche letztendlich maßgeblich für die geforderten Justagetoleranzen sind, entkoppelt von der optischen Empfindlichkeit.

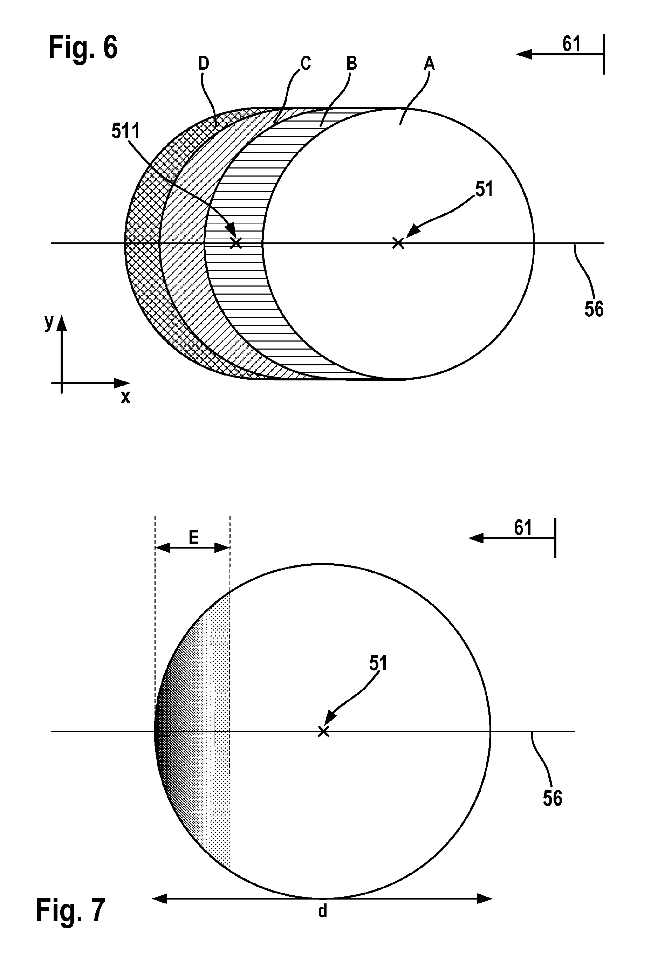

Abbildung 6 zeigt eine schematische Aufsicht auf die aktive Fläche eines Ausführungsbeispiels eines erfindungsgemäßen Photodetektors. Im rechten Bereich erkennt man dabei eine kreisrunde Fläche, bei der die Oberfläche der Photodetektors nicht abgedeckt ist, und somit eine Empfindlichkeit von 100% erzielt wird. An einer Position 51, die beispielsweise im Zentrum des Detektors liegen kann, wird das Licht abgebildet, welches von Objekten in großer Distanz zurückgeworfen wird und welches, aufgrund des großen Abstands, nur eine geringe Intensität aufweist, so dass die maximale Empfindlichkeit des Photodetektors erforderlich ist.

Aufgrund der endlichen Parallaxe generiert Licht, welches von Targets bei kleinerer Entfernung zurückgeworfen wird, einen Fokuspunkt, welcher an einer lateral versetzten Position 511 zentriert ist, d.h. an einem Punkt zentriert ist, der bezüglich der Richtung 61 (X-Achse in Figur 6) für kürzer werdende Objektabstände im Vergleich zur Position 51 verschoben ist. Die wegen des geringeren Abstands zum Target erfolgte Zunahme der Intensität, beispielsweise um einen Faktor 2, wird dadurch kompensiert, dass durch eine geeignete Beschichtung die effektive Empfindlichkeit des Photodetektors im Bereich B des Punkts 511 beispielsweise auf. 50% reduziert ist.

Eine geringfügige Fehljustage in der zur Richtung 61 orthogonalen Richtung (Y-Achse in Figur 6) hat bei dieser Konfiguration keine Auswirkungen auf die Kompensation der entfernungsabhängigen optischen Signalamplitude.

In Figur 6 ist eine schematische Empfindlichkeitsveränderung mit Hilfe von 4 diskreten Einzelzonen A,B,C,D mit 4 diskreten Transmissionswerten gezeigt. Beispielsweise könnte eine Empfindlichkeitsverteilung von A=100%, B=50%, C=30% und D=10% gewählt werden. Alternative Staffelungen der Empfindlichkeit sind natürlich ebenso möglich. Auch ist es denkbar, die gezeigte "gestufte" Filterrealisierung durch eine kontinuierliche Übergangscharakteristik zu ersetzen, z.B. indem entgegen der Richtung der X-Achse in Figur 6 eine kontinuierliche, beispielsweise lineare oder eine einem quadratischen Zusammenhang folgende Zunahme des Abschwächungskoeffizienten bis hin zu einer gegebenenfalls vollständigen Dämpfung realisiert wird, wie dies auch in Figur 7 dargestellt ist.

Ein derartiges Filter, wie es in Figur 6 gezeigt ist und welches als ein Graufilter ausgebildet sein kann, kann beispielsweise dadurch realisiert werden, dass auf die Detektorfläche eines Halbleiterchips eine unterschiedlich dicke Schicht eines absorptiven oder teilreflektiven Mediums abgeschieden wird. Aufgrund der unterschiedlichen Dicke der Schichten ergeben sich unterschiedliche Transparenzen, so dass unterschiedlich viel Licht die Halbleiteroberfläche erreicht und detektiert werden kann. Dies gestattet auch die Realisierung eines besonders gleichmäßigen Übergangs. Vorteilhafterweise kann damit insbesondere auch ein weicher, gradueller Übergang zwischen Bereichen mit im wesentlichen 100 % optischer Empfindlichkeit und Bereichen mit deutlich reduzierter Empfindlichkeit, beispielsweise 0% Empfindlichkeit realisiert werden.

Abweichend vom der in Abbildung 6 gezeigten kreissymmetrischen Basisgeometrie der Detektorfläche ist es alternativ auch denkbar, eine quadratische oder rechteckige oder sonst wie vorteilhaft gestaltete Grundform zu verwenden oder eine alternative geometrische Topologie einzusetzen. Die genaue Form wird dabei zweckmäßig so gewählt werden, dass die im gegebenen System realisierbaren Dejustage-Toleranzen berücksichtigt werden und sich ein in der Summe besonders fertigungsfreundliches System ergibt.

In einer vorteilhaften Ausführungsform des erfindungsgemäßen Photodetektors wird die reduzierte Transmission auf Halbleiteroberfläche des Detektors dadurch realisiert, dass lokal die dem Abschwächungsfaktor entsprechenden Flächenanteile mit Hilfe eines intransparenten Materials abgedeckt werden. Geeignet erscheinen hierfür insbesondere Metallschichten. Beispielsweise sind fein strukturierte Linienelemente, Schraffuren oder reguläre oder pseudo-zufällige Punktmuster zur Erzeugung eines derartigen Rasters geeignet. Im Falle von Punktmustern können z.B. Einzelpunkte mit gleicher, regulärer Position und je nach gewünschter Dämpfung des Messsignals unterschiedlicher Größe verwendet werden. Alternativ können Einzelpunkte mit gleichem Durchmesser und variabler Dichte verwendet werden. Auch eine Kombination beider Parameter erzielt den gewünschten Effekt. Über die Dichte der Rasterelemente auf der aktiven Detektoroberfläche wird dann - gemittelt über den Strahldurchmesser des optischen Signals - die optische Empfindlichkeit der Detektoroberfläche bestimmt. Generell kommen hier alle aus der Drucktechnik zur Erzielung von abgestuften Grautönen eingesetzten Rasterungsverfahren in Frage. Relativ irreguläre, pseudo-zufällige Musterstrukturen haben dabei den Vorteil, bezüglich der Lift-Off-Prozesse für Halbleiterbeschichtungen relativ unproblematischer zu sein, als reguläre Strukturen, wie z.B. Schraffuren.

Alternativ zu einer "Rasterung" der gewünschten Graustufen kann auch eine partiell reflektierende oder partiell absorbierende Beschichtung eingesetzt werden. Der Vorteil einer partiell absorbierenden Schicht ist dabei, dass kontinuierliche Übergänge besonders vorteilhaft hergestellt werden können. Insbesondere ist dabei die Möglichkeit hervorzuheben, die lokalen Dämpfungsfaktoren durch eine Variation der Schichtdicken zu modifizieren.

Die räumliche Ausdehnung in X- und Y- Richtung (siehe Figur 6) der gesamten optisch aktiven Fläche des Photodetektors, d.h. bis zum Rand des photoaktiven Bereichs mit reduzierter Empfindlichkeit, beträgt zweckmäßigerweise 0.3 bis 2 mm, insbesondere 0.4 bis 1 mm, da sich Halbleiterdetektoren mit dieser Gesamtgröße besonders kostengünstig fertigen lassen.

Da das bei dieser kostengünstig realisierbaren maximalen Detektorgröße erzielbare Ortsfenster, bei dem eine optische Mindestleistung den Detektor erreicht, nicht den unmittelbaren Nahbereich (z.B. von wenigen Zentimetern) einschließt, wird der Photodetektor aus Abbildung 6 in einer besonders vorteilhaften Ausführungsform in einem optischen System eingesetzt, in dem mittels einer "Gleitsicht"-Optik auch Licht aus dem unmittelbaren Nahbereich auf den Detektor umgelenkt wird. Für die Amplituden und Entfernungskorrektur im Nahbereich ist dabei dann die genaue Ausformung der optischen Flächen des abbildenden optischen Systems verantwortlich, z.B. für den Entfernungsbereich von 5 cm bis 4 m gerechnet von der Vorderkante des Entfernungsmessers. Die spezielle Auslegung der Geometrie und Struktur der Detektorfläche ist dann hinsichtlich der Amplitudenkorrektur des Empfangssignals im Übergangsbereich zwischen 4 m und beispielsweise 50 m zu optimieren.

Eine alternative und vorteilhafte Form für die Detektorfläche der erfindungsgemäßen Vorrichtung ist in Figur 7 gezeigt, bei dem einseitig ein Randbereich E eines kreisrunden Photodetektors selektiv mit einem in der Dämpfung graduell zunehmenden Filter abgedeckt wird. Der Durchmesser d des Detektors beträgt typischerweise um die 100 µm

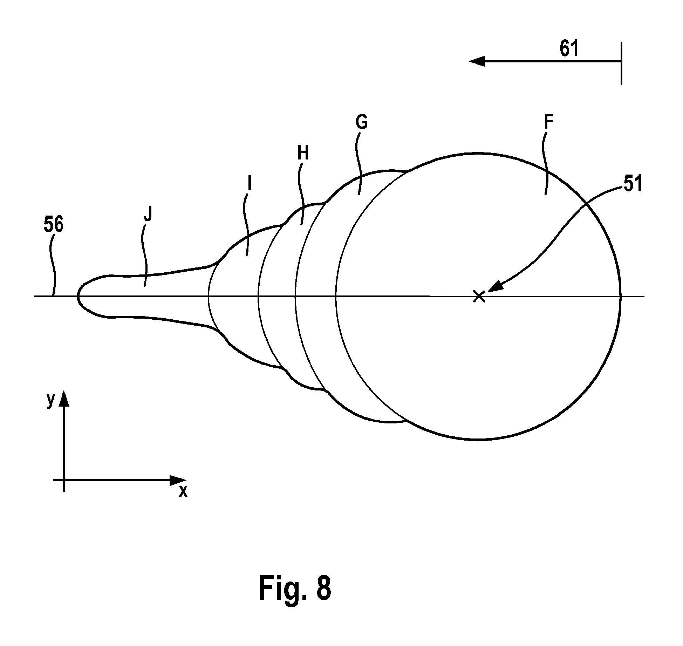

Figur 8 zeigt eine weitere Ausführungsform der erfindungsgemäßen Detektoroberfläche. Dabei wird die Grundidee aus dem Ausführungsbeispiel von Figur 6 kombiniert mit der geometrischen Form der DE 10 130 763 A1, bei der eine Intensitätsreduzierung ausschließlich dadurch realisiert wird, dass aus dem für kurze Targetentfernungen defokussierten Spot durch die sich verjüngende Detektorfläche nur ein vorgegebener Bruchteil geometrisch "herausgeschnitten" wird. Im Vergleich zu einem Aufbau auf der Basis der DE 10 130 763 A1 ist in dem vorliegenden Ausführungsbeispiel der erfindungsgemäßen Vorrichtung die Ausdehnung der verjüngten Detektorfläche in Richtung orthogonal zur Richtung 61 (Y-Achse in Figur 8) erheblich größer, da die Signaldämpfung hier durch eine Kombination von geometrischem "Herausschneiden" durch die Verjüngung in der Form der Detektorfläche und einer zusätzlichem Signaldämpfung durch die angepasste Transmission des Photodetektors zustande kommt. Die Strukturgrößen können dadurch signifikant größer werden, so dass eine Fehljustierung der Optik in Richtung der Y-Achse einen geringeren Einfluss hat, als wenn man auf eine Dämpfungsbeschichtung auf der Oberfläche des Photodetektors verzichtet. Der Detektor gemäß Figur 8 besitzt 5 diskrete Empfindlichkeitsbereiche F,G,H,I,J unterschiedlicher geometrischer Gestaltungsform. Eine mögliche Staffelung der Empfindlichkeitswerte könnte dabei beispielsweise sein: F=100%, G=50%, H=30%, I=10%, J=5%.

Sowohl die Anzahl, als auch die Form, als auch die optischen Empfindlichkeitswerte der einzelnen Segmente der Detektionsfläche sind nicht auf das konkrete Ausführungsbeispiel beschränkt.

Auch kann ein gradueller bzw. kontinuierlicher Übergang der Empfindlichkeit, wie er in der Ausführungsform der Figur 7 beschrieben ist, mit einer Form nach Figur 8 oder einer alternativen Form kombiniert werden.

Auch eine analoge Kombination von vorteilhaften, alternativen Detektorflächen, wie sie in der DE 10 2006 013 292 A1 beschrieben sind, mit der Implementierung von optischen Filterflächen ist im Rahmen der Erfindung beispielsweise möglich.

Die vorliegende Erfindung ist auch auf die aus dem Stand der Technik bekannten Systeme mit mehreren unabhängigen, nicht zusammenhängenden Detektorflächenteile eines Detektors übertragbar. Diese Systeme, wie die DE 100 51 302 A1 verwenden einzelne Flächenteile für die Detektion von Licht, rücklaufend von Targets aus naher Distanz zum Messgerät (Diese diskreten Flächenteile sind seitlich versetzt von der optischen Achse angeordnet) und andere, von den ersten Flächenteilen getrennte Flächenteile, auf die Licht, ausgehend von Targets aus ferner Distanz abgebildet wird (Diese zweiten Flächenteile sind auf der optischen Achse des Empfangssystems platziert).

Um eine näherungsweise entfernungsunabhängige Amplitude zu ermöglichen, ist bei diesen Geräten aus dem Stand der Technik die Größe der dem Nahbereich zugeordneten ersten Flächenelemente erheblich kleiner als die Fläche der Fernbereichs-Flächenteile. Insbesondere die kleine Größe der Nahbereichsflächen stellt aber eine hohe Anforderung an die Justagegenauigkeit der Positionierung von Empfangslinse und Photodetektor dar, da der Fokus-Spot des auf den Detektor zu bündelnden Lichts aus dem Nahbereich eine viel kleinere Detektorfläche mittig treffen muss.

Werden die oben beschriebenen erfindungsgemäßen Filterstrukturen verwendet, so kann die einzelne Fläche diskreter Flächenelemente bei sehr vergleichbaren optischen Empfindlichkeiten des Fotodetektors stark vergrößert werden. Wird zum Beispiel durch die vorgeschlagenen Filterstrukturen eine Bedämpfung des Messsignals um einen Faktor 16 realisiert, so kann die Längenausdehnung des Nahbereichs-Flächenelements, z.B. der Durchmesser eines kreisscheibenförmig ausgeführten Flächenteils, um den Faktor 4 vergrößert werden. Die Anforderung an die Justagetoleranz wird damit vorteilhafter Weise ebenfalls um den Faktor 4 reduziert.

Die erfindungsgemäße Anpassung der Empfindlichkeit kann somit auch bei einer oder auch mehrerer diskreten Teilfläche der vorhandenen Detektorfläche realisiert sein.

In vorteilhafter Weise wird der zusätzliche Freiheitsgrad Detektor-Empfindlichkeit, der dem Entwickler beim Auslegen des optischen Systems durch den Gegenstand der vorliegenden Erfindung zur Verfügung gestellt wird, dazu genutzt, die oben angeführten vier Designziele (Entfernungsbereich, Amplitudendynamik, gesamte aktive Detektorfläche, Justagetoleranzempfindlichkeit) in besonders vorteilhafter Form zu optimieren.

Insbesondere ermöglicht die erfindungsgemäße Vorrichtung, dass die Größe der Strukturen der Detektorflächen, welche letztendlich maßgeblich für die geforderten Justagetoleranzen ist, entkoppelt wird von der optischen Empfindlichkeit des Detektors.

## Patentansprüche

1. Vorrichtung zur optischen Entfernungsmessung, insbesondere eine handgehaltene Vorrichtung, mit einer Sendeeinheit (12) mit einer Lichtquelle (17,18) zur Aussendung optischer Messstrahlung (13,20,22) auf ein Zielobjekt (15) hin, und mit einer zur optischen Achse (38) der Sendeeinheit (12) beabstandeten Empfangseinheit (14) mit zumindest einem optischen Detektor (54) zum Empfang von vom Zielobjekt (15) rücklaufender optischer Strahlung (16,49,50), **dadurch gekennzeichnet, dass** der Detektor (54) der Empfangseinheit (14) zumindest eine Detektionsfläche (66) aufweist, deren optisch aktive Fläche eine variierende optische Empfindlichkeit in Richtung (61) einer Strahlverschiebung für kleiner werdende Zielobjektabstände (48) besitzt, wobei unterschiedlichen Flächenelementen (A,B,C,D,E;F;G,H,I;J) innerhalb einer zusammenhängenden Detektorfläche (66) unterschiedliche optische Empfindlichkeiten zugeordnet sind.

2. Vorrichtung nach Anspruch 1, **dadurch gekennzeichnet, dass** die optische Empfindlichkeit der optisch aktiven Fläche in Richtung (61) einer Strahlverschiebung für kleiner werdende Zielobjektabstände (48) abnimmt

3. Vorrichtung nach einem der vorhergehenden Ansprüche, **dadurch gekennzeichnet, dass** die unterschiedliche optische Empfindlichkeit der aktiven Detektorfläche (66) aus einer unterschiedlich dicken Schicht eines auf die Detektorfläche aufgebrachten, absorptiven oder reflektiven Mediums resultiert.

4. Vorrichtung nach einem der vorhergehenden Ansprüche 1 bis 3, **dadurch gekennzeichnet, dass** die unterschiedliche Empfindlichkeit der aktiven Detektorfläche (66) aus einer auf die Detektorfläche aufgebrachten intransparenten Rastermaske variierender Rastergröße resultiert.

5. Vorrichtung nach einem der vorhergehenden Ansprüche, **dadurch gekennzeichnet, dass** ein kontinuierlicher Übergang (E) zwischen einem Bereich mit im Wesentlichen 100 % optischer Empfindlichkeit und einem Bereich mit deutlich reduzierter optischer Empfindlichkeit, insbesondere mit im wesentlichen 0% optischer Empfindlichkeit, vorhanden ist.

6. Vorrichtung nach einem der vorhergehenden Ansprüche 1 bis 4, **dadurch gekennzeichnet, dass** zumindest ein diskreter Übergang (A,B,C,D,F,G,H,I,J) zwischen einem Bereich mit im wesentlichen 100 % optischer Empfindlichkeit und einem Bereich mit reduzierter optischer Empfindlichkeit, vorhanden ist.

7. Vorrichtung nach einem der vorhergehenden Ansprüche, **dadurch gekennzeichnet, dass** die optische Empfindlichkeit des Detektors zusätzlich dadurch reduziert ist, dass eine sich in Richtung (61) einer Strahlverschiebung für kleiner werdende Zielobjekt-abstände (48) verjüngende optisch aktiven Fläche (F,G,H,I,J) Verwendung findet.

8. Vorrichtung nach einem der vorhergehenden Ansprüche, **dadurch gekennzeichnet, dass** die Lichtquelle (17,18) ein Laser, insbesondere eine Laserdiode (18) ist.

9. Vorrichtung nach Anspruch 8, **dadurch gekennzeichnet, dass** die Lichtquelle (17,18) Strahlung im für das menschliche Auge sichtbaren Wellenlängenbereich des Spektrums elektromagnetischer Wellen, insbesondere grünes Licht, emittiert.

## Claims

1. Device for optical distance measurement, in particular a handheld device, comprising a transmitting unit (12) with a light source (17, 18) for emitting optical measurement radiation (13, 20, 22) towards a target object (15), and comprising a receiving unit (14), spaced apart from the optical axis (38) of the transmitting unit (12), with at least one optical detector (54) for receiving optical radiation (16, 49, 50) returning from the target object (15), **characterized in that** the detector (54) of the receiving unit (14) has at least one detection surface (66) whose optically active surface has a varying optical sensitivity in a direction (61) of a beam shift for decreasing target object distances (48), wherein different surface elements (A, B, C, D, E, F, G, H, I, J) within a continuous detector surface (66) are assigned different optical sensitivities.

2. Device according to Claim 1, **characterized in that** the optical sensitivity of the optically active surface decreases in the direction (61) of a beam shift for decreasing target object distances (48).

3. Device according to either of the preceding claims, **characterized in that** the different optical sensitivity of the active detector surface (66) results from a layer of differing thicknesses of an absorptive or reflective medium applied to the detector surface.

4. Device according to any of the preceding Claims 1 to 3, **characterized in that** the different sensitivity of the active detector surface (66) results from a non-transparent grid mask of varying grid size applied to the detector surface.

5. Device according to any of the preceding claims, **characterized in that** a continuous transition (E) between a region having substantially 100% optical sensitivity and a region having significantly reduced optical sensitivity, in particular having substantially 0% optical sensitivity, is present.

6. Device according to any of the preceding Claims 1 to 4, **characterized in that** at least one discrete transition (A, B, C, D, F, G, H, I, J) between a region having substantially 100% optical sensitivity and a region having reduced optical sensitivity is present.

7. Device according to any of the preceding claims, **characterized in that** the optical sensitivity of the detector is additionally reduced by the use of an optically active surface (F, G, H, I, J) that tapers in the direction (61) of a beam shift for decreasing target object distances (48).

8. Device according to any of the preceding claims, **characterized in that** the light source (17, 18) is a laser, in particular a laser diode (18).

9. Device according to Claim 8, **characterized in that** the light source (17, 18) emits light in the wavelength range of the spectrum of electromagnetic waves that is visible to the human eye, in particular green light.

## Revendications

1. Dispositif de mesure de distance optique, en particulier un dispositif portatif, comportant une unité d'émission (12) ayant une source de lumière (17, 18) pour émettre un faisceau de mesure optique (13, 20, 22) vers un objet cible (15), et comportant unité de réception (14) espacée de l'axe optique (38) de l'unité d'émission (12), laquelle unité de réception comporte au moins un détecteur optique (54) destiné à recevoir un rayonnement optique (16, 49, 50) renvoyé par l'objet cible (15), **caractérisé en ce que** le détecteur (54) de l'unité de réception (14) comprend au moins une surface de détection (66) dont la surface optiquement active présente une sensibilité optique variant dans la direction (61) d'un déplacement du faisceau lorsque les distances (48) de l'objet cible diminuent, dans lequel des sensibilités optiques différentes sont associées à des éléments de surface différents (A, B, C, D, E ; F ; G, H, I ; J) au sein d'une surface de détecteur continue (66).

2. Dispositif selon la revendication 1, **caractérisé en ce que** la sensibilité optique de la surface optiquement active diminue dans la direction (61) d'un déplacement de faisceau lorsque les distances (48) de l'objet cible diminuent.

3. Dispositif selon l'une quelconque des revendications précédentes, **caractérisé en ce que** les différentes sensibilités optiques de la surface de détecteur active (66) résulte d'une couche d'épaisseur différente d'un milieu absorbant ou réfléchissant déposé sur la surface du détecteur.

4. Dispositif selon l'une quelconque des revendications 1 à 3 précédentes, **caractérisé en ce que** la sensibilité différente de la surface de détecteur active (66) résulte d'une taille de trame variable d'un masque tramé opaque déposé sur la surface du détecteur.

5. Dispositif selon l'une quelconque des revendications précédentes, **caractérisé en ce qu'**une transition continue (E) est présente entre une zone dont la sensibilité optique est sensiblement de 100 % et une zone dont la sensibilité optique est fortement réduite, en particulier dont la sensibilité optique est sensiblement de 0 %.

6. Dispositif selon l'une quelconque des revendications 1 à 4 précédentes, **caractérisé en ce qu'**au moins une transition discrète (A, B, C, D, F, G, H, I, J) est présente entre une zone dont la sensibilité optique est sensiblement de 100 % et une zone dont la sensibilité optique est réduite.

7. Dispositif selon l'une quelconque des revendications précédentes, **caractérisé en ce que** la sensibilité optique du détecteur est en outre réduite par le fait qu'on utilise une surface optiquement active (F, G , H, I, J) amincie dans la direction (61) d'un déplacement de faisceau lorsque les distances (48) de l'objet cible diminuent.

8. Dispositif selon l'une quelconque des revendications précédentes, **caractérisé en ce que** la source de lumière (17,18) est un laser, en particulier une diode laser (18).

9. Dispositif selon la revendication 8, **caractérisé en ce que** la source de lumière (17, 18) émet un rayonnement dans la gamme des longueurs d'onde visibles à l'oeil humain du spectre des ondes électromagnétiques, en particulier de lumière verte.
